# EUROPÄISCHE PATENTANMELDUNG

(11) **EP 0 727 586 A1**
(43) Veröffentlichungstag der Anmeldung: **21.08.1996**
(21) Anmeldenummer: 96101920.5
(22) Anmeldetag: 09.02.1996
(51) Int. Cl.: F16C 13/00

(54) **Durchbiegungseinstellwalze**

(30) Priorität: 17.02.1995 DE 19505379
(71) Anmelder: Voith Sulzer Papiermaschinen GmbH, 89522 Heidenheim (DE)
(72) Erfinder: Schnyder, Eugen, CH-5622 Waltenschwil (CH)
(74) Vertreter: Knoblauch, Ulrich, Dr.-Ing., Patentanwälte Dr. Knoblauch

(57) **Zusammenfassung**

Die Erfindung betrifft eine Durchbiegungseinstellwalze mit einem feststehenden Träger (3) und einem um diesen drehbaren Walzenmantel (1), der auf durch ein Druckfluid betätigbaren Stützelementen (2) abgestützt ist, welche mehrere Druckzonen (4, 4') bilden, denen das Druckfluid mit verschiedenen Drücken durch in einer zentralen Bohrung (5) des Trägers (3) nebeneinander verlaufende Zuführrohre (6) zuführbar ist, welche am Ende des Trägers (3) an Speiseleitungen angeschlossen sind, wobei in der Bohrung des Trägers Trennwände (7) angeordnet sind, welche den einzelnen Druckzonen (4, 4') zugeordnete Abschnitte der Bohrung (5) voneinander trennen, in welche jeweils eines der Zuführrohre (6) eine Öffnung (10) besitzt.

Davon ausgehend wird die Anzahl der möglichen Druckzonen dadurch erhöht, daß die Trennwände (7) jeweils von zwei axial voneinander beabstandeten und die hindurch verlaufenden Zuführrohre (6) hinsichtlich ihrer Lage fixierenden Scheiben (8, 8') gebildet werden, wobei der Raum zwischen den beiden Scheiben (8, 8') jeweils von einer Vergußmasse (9) druckdicht ausgefüllt ist.

## Beschreibung

Die Erfindung betrifft eine Durchbiegungseinstellwalze gemäß dem Oberbegriff des Anspruchs 1. Derartige Walzen finden insbesondere bei der Herstellung oder Behandlung von Materialbahnen, vor allem Faserstoffbahnen und Gewebe, Anwendung.

Zur Fluidversorgung der einzelnen Druckzonen der Stützelemente mit dem entsprechenden Druck sind diese, wie beispielsweise in der DE-PS 28 47 029, über Zuführrohre mit den Speiseleitungen verbunden. Diese Zuführrohre werden dort durch die die Druckzonen abgrenzenden Trennwände bis zur jeweils zu versorgenden Druckzone geführt. Dabei werden die Durchführungen der Trennwände gegenüber den Zuführrohren abgedichtet. Dies erfordert wegen der Dichtelemente insbesondere in radialer Richtung relativ viel Platz, so daß die Anzahl der Zuführrohre und damit auch der Druckzonen begrenzt ist. Aber gerade in der vielzonigen Beeinflußbarkeit des Druckes über die Stützelemente entlang der Durchbiegungseinstellwalze wird ein wichtiges Kriterium für die Verbesserung der Produktqualität gesehen.

Auch die Verwendung von Zuführbohrungen im massiven Träger stellt hier keine Lösung dar, da, insbesondere bei breiten Walzen, der erforderliche, mit der Bohrungstiefe steigende Bohrungsdurchmesser die Anzahl an Zuführbohrungen begrenzt.

Der Erfindung liegt daher die Aufgabe zugrunde, bei Durchbiegungseinstellwalzen die Anzahl der unabhängig voneinander mit Druckfluid versorgbaren Druckzonen zu erhöhen.

Erfindungsgemäß wurde die Aufgabe durch die im Anspruch 1 beschriebene Vorrichtung gelöst, wobei die Unteransprüche besondere Ausführungsformen darstellen.

Dadurch, daß die Trennwände jeweils von mindestens zwei axial voneinander beabstandeten und die hindurch verlaufenden Zuführrohre hinsichtlich ihrer Lage fixierenden Scheiben gebildet werden, wobei der Raum zwischen den beiden Scheiben jeweils von einer Vergußmasse druckdicht ausgefüllt ist, kann auf die bisher übliche Abdichtung der Zuführrohre gegenüber den Trennwänden bzw. Scheiben verzichtet werden. Infolgedessen kann der gewonnene radiale Raum für weitere Zuführrohre genutzt werden.

Um den Herstellungsaufwand zu vereinfachen, ist es vorteilhaft, wenn die Zuführrohre gleich lang und an dem im Träger liegenden Ende verschlossen sind, wobei das der jeweiligen Druckzone zugeordnete Zuführrohr innerhalb der Druckzone eine Öffnung besitzt. Damit sind bis auf die Lage der Öffnungen in den Zuführrohren alle Teile gleich ausgebildet.

Eine Ausnahme kann hierbei natürlich das der von den Speiseleitungen am weitesten entfernt angeordneten Druckzone zugeordnete Zuführrohr bilden, da dies zur einfachen Bildung einer Öffnung am Ende unverschlossen sein kann.

Für die einfache und genaue Montage ist es von Vorteil, wenn zwischen den Trennwänden mindestens jeweils ein Abstandhalter, beispielsweise in Form einer Hülse oder eines Federelementes, insbesondere Spiralfederelementes, vorhanden ist.

Falls mindestens ein Spannelement axial durch die Trennwände und Abstandhalter verläuft, besteht die Möglichkeit zur Anwendung eines einfachen Verfahrens zur Herstellung einer derartigen Durchbiegungseinstellwalze, das dadurch gekennzeichnet ist, daß die die Zuführrohre aufnehmenden Trennwände vor dem Einschieben in die Bohrung des Trägers hergestellt werden und nach dem Einschieben die radiale Ausdehnung der Trennwände, d.h. ihrer Vergußmasse, von dem vom Spannelement ausgehenden und über die Abstandhalter auf die Scheiben der Trennwände übertragenen Druck vergrößert wird. Damit wird, bedingt durch die hierfür notwendige Elastizität der Vergußmasse ein einfaches Hineinschieben aber auch Herausziehen der Zuführrohre mit den Trennwänden in bzw. aus der Bohrung des Trägers bei entlastetem Spannelement ermöglicht und auch eine Abdichtung der Trennwände gegenüber der Bohrung bei aktivem Spannelement gewährleistet.

Wegen der thermisch bedingten Längen- bzw. Abstandsänderungen sowie der von dem Spannelement verursachten Abstandsänderungen zwischen den Trennwänden sollten die Zuführrohre und das Spannelement im Bereich der Trennwände vor dem Ausfüllen mit der Vergußmasse mit einem Trennmittel versehen werden, so daß eine Bewegung dieser Teile in der Vergußmasse möglich ist.

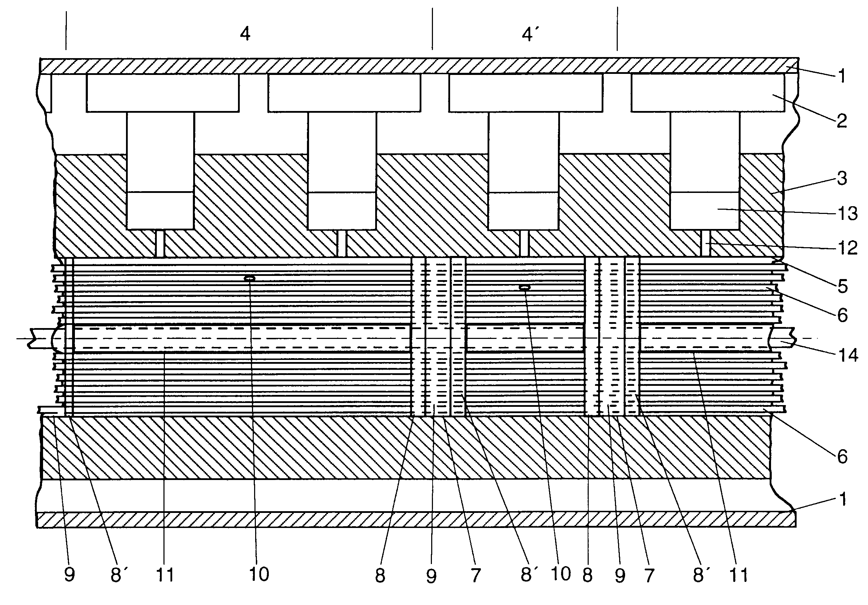

Nachfolgend soll die Erfindung an einem Ausführungsbeispiel näher erläutert werden. Die beiliegende Figur zeigt einen Teilschnitt durch eine Durchbiegungseinstellwalze, die im wesentlichen aus einem feststehenden Träger 3 und einen um diesen drehbaren Walzenmantel 1 aufgebaut ist. Dabei stützt sich der Walzenmantel 1 auf mehreren über ein Druckfluid steuerbaren Stützelementen 2 ab, wobei der Spalt zwischen dem Walzenmantel 1 und den Stützelementen 2 hydrodynamisch und/oder hydrostatisch auf bekannte Art und Weise geschmiert wird. Die Richtungsangaben axial und radial beziehen sich dabei immer auf die Durchbiegungseinstellwalze.

Die entlang der Walze vorhandenen Druckzonen 4 bzw. 4' umfassen ein oder mehrere Stützelemente 2, wobei den Druckzonen 4 bzw. 4' das Druckfluid mit unterschiedlichen Drücken durch in einer zentralen Bohrung 5 des Trägers 3 angeordnete Zuführrohre 6 zuführbar ist, welche am Ende des Trägers 3 an Speiseleitungen angeschlossen sind.

Zur Bildung der Druckzonen 4 und 4' sind die entsprechenden Abschnitte der Bohrung 5 des Trägers 3 durch Trennwände 7 voneinander getrennt. Diese Abschnitte sind über Kanäle 12 mit den Druckkammern 13 der entsprechenden Stützelemente 2 verbunden.

Durch die Trennwände 7 sind alle Zuführrohre 6 geführt, wobei diese gleich lang und mit Ausnahme des der von den Speiseleitungen am weitesten entfernt angeordneten Druckzone 4 bzw. 4' zugeordneten Zuführrohres 6 an dem im Träger 3 liegenden Ende verschlossen sind. Die Verbindung mit der von dem jeweiligen Zuführrohr 6 zu speisenden Druckzone erfolgt über zumindest eine in den jeweiligen Abschnitt der Bohrung 5 des Trägers 3 mündende Öffnung 10 des Zuführrohres 6. Natürlich können die Zuführrohre 6 auch nur bis zum entsprechenden Abschnitt der Bohrung 5 geführt werden. Allerdings hat dies unterschiedliche Ausführungen der Zuführrohre 6 sowie der Trennwände 7 zur Folge.

Die Trennwände 7 werden hier jeweils von zwei axial voneinander beabstandeten und die hindurch verlaufenden Zuführrohre 6 aufnehmenden und stabilisierenden Scheiben 8 und 8' gebildet. Da die Öffnungen der Scheiben 8 und 8' für die Montage der Zuführrohre 6 ein ausreichendes Spiel besitzen, erfolgt die druckdichte Abdichtung zwischen den Abschnitten der Bohrung 5 des Trägers mit Hilfe einer Vergußmasse 9, die in den Raum zwischen den Scheiben 8 und 8' eingebracht wird. Dadurch können die Dichtungen zwischen den Zuführrohren 6 und den Scheiben 8 bzw. 8' entfallen, was den nötigen Raum für weitere Zuführrohre 6 zur Folge hat.

Zur Lagefixierung der Trennwände 7 befindet sich jeweils ein Abstandhalter 11 in Form einer axial verlaufenden Hülse zwischen diesen, wobei axial durch die Trennwände 7 und die Abstandhalter 11 ein Spannelement 14 verläuft.

Zur Herstellung dieser Einheit werden die mit den entsprechenden Öffnungen 10 versehenen Zuführrohre 6 durch die Scheiben 8 und 8' geführt. Anschließend wird der Raum zwischen den Scheiben 8 und 8' mit einer Vergußmasse ausgefüllt, die später natürlich auch den Druckunterschieden zwischen den Druckzonen 4 und 4' standhalten muß. Dabei können entsprechende Gießformen zur Anwendung kommen. Nach dem Aushärten kann das Rohrbündel problemlos in die Bohrung 5 des Trägers 3 eingeschoben werden. Nach dem Einschieben dieser Einheit wird von dem Spannelement 14 ausgehend und von den Abstandhaltern 11 übertragen, eine Kraft auf die Scheiben 8 und 8' ausgeübt. Dies führt dazu, daß sich die Vergußmasse 9 in radialer Richtung ausdehnt, was auch zu einer Abdichtung gegenüber der Bohrung 5 führt. Soll die Einheit wieder entfernt werden, so kann dies bei entsprechender Elastizität der Vergußmasse 9 nach dem Entlasten des Spannelementes 14 problemlos erfolgen.

Um eine Lageänderung zwischen Spannelement 14, Zuführrohren 6 und der Vergußmasse 9 zu ermöglichen, kommt an den entsprechenden Kontaktstellen vor dem Vergießen ein Trennmittel zur Anwendung.

## Patentansprüche

1. Durchbiegungseinstellwalze mit einem feststehenden Träger (3) und einem um diesen drehbaren Walzenmantel (1), der auf durch ein Druckfluid betätigbaren Stützelementen (2) abgestützt ist, welche mehrere Druckzonen (4, 4') bilden, denen das Druckfluid mit verschiedenen Drücken durch in einer axialen Bohrung (5) des Trägers (3) nebeneinander verlaufende Zuführrohre (6) zuführbar ist, welche am Ende des Trägers (3) an Speiseleitungen angeschlossen sind, wobei in der Bohrung (5) des Trägers (3) Trennwände (7) angeordnet sind, welche den einzelnen Druckzonen (4, 4') zugeordnete Abschnitte der Bohrung (5) voneinander trennen, in welche jeweils eines der Zuführrohre (6) eine Öffnung (10) besitzt,
**dadurch gekennzeichnet**,
daß die Trennwände (7) jeweils von mindestens zwei axial voneinander beabstandeten und die hindurch verlaufenden Zuführrohre (6) hinsichtlich ihrer Lage fixierenden Scheiben (8, 8') gebildet werden, wobei der Raum zwischen den beiden Scheiben (8, 8') jeweils von einer Vergußmasse (9) druckdicht ausgefüllt ist.

2. Durchbiegunseinstellwalze nach Anspruch 1,
**dadurch gekennzeichnet**,
daß alle Zuführrohre (6) gleich lang sind.

3. Durchbiegungseinstellwalze nach Anspruch 1 oder 2,
**dadurch gekennzeichnet**,
daß zwischen den Trennwänden (7) jeweils mindestens ein Abstandhalter (11) angeordnet ist.

4. Durchbiegungseinstellwalze nach Anspruch 3,
**dadurch gekennzeichnet**,
daß der Abstandhalter (11) als axial verlaufende Hülse ausgebildet ist.

5. Durchbiegungseinstellwalze nach Anspruch 3,
**dadurch gekennzeichnet**,
daß der Abstandhalter (11) als axial ausgerichtetes Federelement, insbesondere Spiralfederelement, ausgebildet ist.

6. Durchbiegungseinstellwalze nach einem der Ansprüche 3 bis 5,
**dadurch gekennzeichnet**,
daß mindestens ein Spannelement (14) axial durch die Trennwände (7) und Abstandhalter (11) verläuft.

7. Verfahren zur Herstellung einer Durchbiegungseinstellwalze nach Anspruch 6,
**dadurch gekennnzeichnet**,
daß die die Zuführrohre (6) aufnehmenden Trennwände (7) vor dem Einschieben in die Bohrung (5) des Trägers (3) hergestellt werden und nach dem Einschieben die radiale Ausdehnung der Trennwände (7) von dem vom Spannelement (14) ausgehenden und über die Abstandhalter (11) auf die Trennwände (7) übertragenen Druck vergrößert wird.
